# EUROPÄISCHE PATENTSCHRIFT

(11) **EP 3 358 363 B1**
(45) Veröffentlichungstag und Bekanntmachung des Hinweises auf die Patenterteilung: **09.03.2022**
(21) Anmeldenummer: 18153443.9
(22) Anmeldetag: 25.01.2018
(51) Int. Cl.: G01S 5/14

(54) **VERFAHREN UND SYSTEM ZUR POSITIONSBESTIMMUNG VON MINDESTENS EINEM FLURFÖRDERZEUG**
METHOD AND SYSTEM FOR DETERMINING THE POSITION OF AT LEAST ONE INDUSTRIAL TRUCK
PROCÉDÉ ET SYSTÈME DE DÉTERMINATION DE LA POSITION D'AU MOINS UN CHARIOT DE MANUTENTION

(30) Priorität: 03.02.2017 DE 102017102116
(43) Veröffentlichungstag der Anmeldung: 08.08.2018
(73) Patentinhaber: Jungheinrich Aktiengesellschaft, 22047 Hamburg (DE)
(72) Erfinder: Mänken, Frank, 24558 Henstedt-Ulzburg (DE)
(74) Vertreter: Hauck Patentanwaltspartnerschaft mbB

(56) Entgegenhaltungen:
- EP-A1- 1 167 155
- WO-A2-03/012470
- DE-A1-102006 038 856
- DE-A1-102012 016 783
- US-A1- 2010 127 853

## Beschreibung

Die vorliegende Erfindung betrifft ein Verfahren zur Positionsbestimmung von mindestens einem Flurförderzeug in einem Bereich mit einer Vielzahl von stationären Funkstationen. Ebenso betrifft die Erfindung ein System zur Ortsbestimmung von mindestens einem Flurförderzeug.

Für die Positionsbestimmung von Flurförderzeugen in Lagerbereichen und anderen definierten Umgebungen ist eine Reihe von unterschiedlichen Ansätzen bekannt. So ist es beispielsweise bekannt, RFID-Transponder in den Boden einzulassen. Bei Überfahrt mit einem Flurförderzeug kann diesem so seine Position mitgeteilt werden. Im Bereich der Funktechnik sind beispielsweise Laufzeitmessungen und/oder Einfallswinkelmessungen zur Positionsbestimmung des Flurförderzeugs relativ zu statisch montierten Einheiten bekannt.

Aus DE 10 2009 004 854 B4 ist ein Verfahren und System zur Positionsbestimmung eines Flurförderzeugs bekannt, bei dem ein mehrachsiger Kreiselsensor, insbesondere ein Gyroskop zum Einsatz kommt.

Aus DE 10 2001 018 520 A1 ist ein Verfahren zum Anfahren eines Lagerplatzes mit einem Flurförderzeug bekannt, bei dem die aktuelle Position des Flurförderzeugs erfasst und zu der aktuellen Position einen auf die Höhe des anzufahrenden Lagerplatzes abgestimmten Hubhöhenvorwahlwert eingestellt wird.

Aus DE 10 2009 013 671 A1 ist eine Vorrichtung zur Positionsbestimmung eines Flurförderzeugs bekannt. Hierbei werden mehreren Lichtquellen an vordefinierten Standorten positioniert und eine die Lichtquelle eindeutig kennzeichnende Strahlung von diesen ausgesendet. Ein Flurförderzeug wertet die eingehende Strahlung unter Einbeziehung der relativen Winkel zueinander aus, um seine aktuelle Position und Orientierung zwischen drei Lichtquellen zu bestimmen.

Aus der mobilen Robotik sind SLAM-Verfahren (*simultaneous locating and mapping*) bekannt, die auf Basis von Bildern eines Laserscanners oder einer Kamera natürliche oder künstliche Landmarken identifizieren, sich an diesen orientieren und eine Position relativ zu den Landmarken berechnen können. Im Bereich der Funktechnik ermöglicht das satellitengestützte GPS (*global positioning system*) eine weltweite Ortsbestimmung im Außenbereich. Im Innenbereich ermöglichen an bekannten Orten angebrachte Sende- und Empfangseinrichtungen Ortsbestimmung beispielsweise über *cell of origin*, relative Signalstärke, Winkelbestimmungen (*angle of arrival*), Zeitunterschiedsmessungen (*time difference of arrival* TDoA) und Laufzeitmessungen ToF. Bei der Bestimmung von Funkverfahren ist stets eine Infrastruktur von mobilen Funkstationen (*tags*) und stationären Funkstationen (Anker) erforderlich. Die stationären Funkstationen werden auch als Funkbake (*beacon*) bezeichnet. Im Vergleich zu leitungsgebundenen Kommunikationsnetzen besitzen Funknetze eine deutlich geringere Bandbreite für den Datenaustausch.

Aus WO 03/012470 sind automatisch fahrende Fahrzeuge bekannt, die über ein Hochfrequenzfunknetz ihre Position bestimmen. Ebenfalls ist bekannt, zwischen dem Austausch der Navigationssignale zusätzliche Informationen unter den Fahrzeugen oder mit einer zentralen Station auszutauschen.

Aus DE 10 2012 016 783 A1 ist die Bestimmung einer Position einer mobilen Vorrichtung in Bezug auf ein Fahrzeug bekannt geworden. Hierbei wird ein Round Trip Time of Flight-(RToF)-Verfahren eingesetzt, um die Positionsbestimmung durchzuführen.

Aus EP 1 167 155 A1 ist ein Verfahren zur Positionsbestimmung von Fahrzeugen in einer industriellen Umgebung bekannt. Hierbei sind Sender in definierten Positionen aufgestellt. Aus drei empfangenen Sendersignalen wird eine Fahrzeugposition bestimmt. Hierbei wird ein RTT eingesetzt, der jedoch von einem fest im Raum installierten Transmitter initiiert wird.

Aus US 2010/0127853 ist ein System zur Kommunikation mit und zur Positionsbestimmung von Fahrzeugen in einem industriellen Umfeld bekannt. Transmitter der Fahrzeuge sowie der Umgebung (fest installiert) bilden hier ein Adhoc-Netzwerk, bei dem die Position der Knoten über Laufzeitmessungen bestimmt werden.

Der Erfindung liegt die Aufgabe zugrunde, in einem System zur Positionsbestimmung von mindestens einem Flurförderzeug in einem Bereich mit einer Vielzahl von stationären Funkstationen die Möglichkeit für einen umfassenden Datenaustausch zu schaffen.

Erfindungsgemäß wird die Aufgabe durch ein Verfahren mit den Merkmalen aus Anspruch 1 und ein System mit den Merkmalen aus Anspruch 9 gelöst. Vorteilhafte Ausgestaltungen bilden den Gegenstand der Unteransprüche.

Das erfindungsgemäße Verfahren ist vorgesehen und bestimmt, um Daten in einem System zur Ortsbestimmung von mindestens einem Flurförderzeug in einem Bereich zu übertragen. Das System zur Ortsbestimmung ist ein funkgestütztes System, bei dem eine Vielzahl von stationären Funkstationen vorgesehen ist, die ansprechend auf ein Positionsbestimmungssignal ein Positionssignal aussenden. Das Flurförderzeug besitzt eine mobile Funkstation. Der Begriff der Position umfasst hierbei die räumliche Position des Flurförderzeugs in dem Bereich und seine Orientierung in dieser Position. Das Positionssignal identifiziert die sendende stationäre Funkstation und erlaubt der mobilen Funkstation einen Abstand zu der stationären Funkstation zu bestimmen. Stationäre und mobile Funkstationen sind als Sende- und Empfangseinheit ausgebildet, die in der Lage sind, Funksignale zu empfangen und auszusenden. Bei dem erfindungsgemäßen Verfahren wird ein Positionsbestimmungssignal mit der mobilen Funkstation an die stationären Funkstationen gesendet. Die stationären Funkstationen senden jeweils ein Positionssignal ansprechend auf ein empfangenes Positionsbestimmungssignal aus. Die Positionssignale werden von der mobilen Funkstation empfangen, wobei die mobile Funkstation mindestens Positionssignale von drei stationären Funkstationen empfängt. Bei dem erfindungsgemäßen Verfahren ist vorgesehen, zusätzliche Daten in Form von Fahrzeugdaten an das Positionsbestimmungssignal anzuhängen. Ebenso können alternativ oder zusätzlich Bereichsdaten an das von der stationären Funkstation ausgesendete Positionssignal angehängt werden. Die Bereichsdaten enthalten Daten zu einem räumlichen Bereich, der der stationären Funkstation zugeordnet ist. Die zusätzlichen Daten, seien es angehängte Fahrzeugdaten oder angehängte Bereichsdaten werden mit dem Positionsbestimmungssignal und/oder dem Positionssignal ausgewertet. Das erfindungsgemäße Verfahren ermittelt aus mindestens drei empfangenen Positionssignalen eine aktuelle Fahrzeugposition. Der besondere Vorteil des erfindungsgemäßen Verfahrens liegt darin, dass in dem Funknetz, das zur Positionsbestimmung ausgelegt ist, zusätzlich Daten in Form von Fahrzeugdaten und Bereichsdaten ausgetauscht werden können. Die Daten sind auf diese Weise eng mit den Positionsdaten verbunden und können so in den Flurförderzeugen oder den stationären Funkstationen entsprechend weiter verarbeitet werden. Mit dem erfindungsgemäßen Verfahren wird ein einziges Funknetz zur Positionsbestimmung und zur Datenübertragung genutzt.

In einer bevorzugten Ausgestaltung des erfindungsgemäßen Verfahrens enthalten die Fahrzeugdaten mindestens einen Datensatz zur aktuellen Position des Flurförderzeugs, zur Fahrgeschwindigkeit des Flurförderzeugs, zu einem Lenkwinkeleinschlag des Flurförderzeugs und/oder Betriebsdaten des Flurförderzeugs zur Last, Hubhöhe, Ladezustand seiner Batterie und ob Licht ein- oder ausgeschaltet ist. Die Fahrzeugdaten sind an das Positionsbestimmungssignal, das von der mobilen Funkstation ausgesendet wird, angehängt. Die in den Fahrzeugdaten enthaltenen Datensätze können von einer oder mehreren empfangenden stationären Funkstationen wieder abgetrennt werden und beispielsweise über ein leitungsgebundenes Netzwerk von der stationären Funkstation weitergeleitet oder verarbeitet werden. Dabei sind Datensätze zur aktuellen Position, zur Fahrgeschwindigkeit und zum Lenkwinkeleinschlag sehr hilfreich, um drohenden Kollisionen oder eine kritische Ansammlung von Flurförderzeugen rechtzeitig zu entdecken. Betriebsdaten zu Last, Hubhöhe, Lagezustand der Batterie sowie Licht können auch zentral verarbeitet und beispielsweise bei der Auftragsvergabe an die Flurförderzeuge berücksichtigt werden.

In einer weiteren bevorzugten Ausgestaltung des Verfahrens enthalten die Fahrzeugdaten mindestens einen Steuerbefehl für eine stationäre Funkstation, der einen mit der stationären Funkstation verbundenen Aktuator steuert. Der Steuerbefehl kann beispielsweise darauf gerichtet sein, eine Innenbeleuchtung ein- oder auszuschalten, oder beispielsweise eine Tordurchfahrt zu öffnen oder zu schließen. Gerade im Zusammenhang mit den Positionsdaten des Flurförderzeugs besteht die Möglichkeit, ortsabhängige Steuerbefehle abzusetzen.

In einer bevorzugten Weiterbildung des erfindungsgemäßen Verfahrens enthalten die Bereichsdaten einen Datensatz, der Sensordaten von einem der jeweiligen Funkstation zugeordneten Sensor, Zustandsdaten von der jeweiligen stationären Funkstation zugeordneten schaltbaren Einrichtung oder Betriebsdaten von der jeweiligen stationären Funkstation zugeordneten stationären Lagereinrichtung enthält. Die Sensordaten innerhalb der Bereichsdaten können beispielsweise Helligkeit, Licht, Temperatur und dergleichen betreffen. Diese Daten ermöglichen dem Flurförderzeug, sein Fahrparameter beispielsweise mit maximal zulässiger Fahrgeschwindigkeit und dergleichen an die erfassten Sensordaten anzupassen. Die Datensätze zu den Zustandsdaten umfassen schaltbare Einrichtungen, wie beispielsweise Lagertore und andere in einem Lager schaltbare Einrichtungen. Der Datensatz zu den Betriebsdaten betrifft beispielsweise stationäre Anlageeinrichtungen, wie beispielsweise in definierten Lagerbereichen vorgesehene stationäre Fördertechnik und dergleichen. Sensordaten, Zustandsdaten und Betriebsdaten an dem Flurförderzeug erlauben, entsprechend auf die Daten zu reagieren, Warnsignale für den Fahrer abzusetzen und Fahrzeugparameter wie beispielsweise maximal zulässige Höchstgeschwindigkeit, Hubhöhe und dergleichen anzupassen.

In einer bevorzugten Weiterbildung des erfindungsgemäßen Verfahrens enthalten die Bereichsdaten mindestens einen Steuerbefehl für ein Flurförderzeug, der eine Funktion an dem Flurförderzeug mit oder ohne Bestätigung durch einen Fahrer steuert. Ein solcher Steuerbefehl kann beispielsweise der Befehl sein, Licht an dem Flurförderzeug einzuschalten oder die zulässige Höchstgeschwindigkeit für dieses Flurförderzeug abzusenken.

In einer bevorzugten Weiterführung des erfindungsgemäßen Verfahrens leitet die stationäre Funkeinheit empfangene Datensätze zu Fahrzeugdaten an eine übergeordnete Steuereinheit weiter. Hierdurch kann die aktuelle Situation in dem von der Ortsbestimmung erfassten Bereich übermittelt werden, insbesondere können die Fahrzeugdaten der einzelnen Flurförderzeuge mit deren Position aktuell zusammengestellt werden.

In einer bevorzugten Ausgestaltung sind die stationären Funkstationen dazu ausgebildet, untereinander Daten zu senden und zu empfangen. Auf diese Art und Weise können über die Flurförderzeuge hinweg innerhalb des Funknetzwerks Daten ausgetauscht werden. Bevorzugt ist jeder Funkstation, sowohl den stationären Funkstationen als auch den mobilen Funkstationen eine eindeutige Adresse zugeordnet, die einen gerichteten Datenaustausch zwischen den Flurförderzeugen gestattet. Ebenso ist es möglich, dass auch die stationären Funkstationen Daten gezielt untereinander austauschen. So können beispielsweise auch unter den stationären Funkstationen Daten per Funk ausgetauscht werden, wenn nur einzelne stationäre Funkstationen leitungsgebunden mit einem weiteren Datennetz verbunden sind.

Die erfindungsgemäße Aufgabe wird ebenfalls durch ein System zur Ortsbestimmung von mindestens einem Flurförderzeug gelöst. Das System weist eine Vielzahl von stationären Funkstationen auf, die ausgebildet sind, um ansprechend auf ein Positionsbestimmungssignal ein Positionssignal auszusenden. Jedes der Flurförderzeuge weist eine mobile Funkstation auf, die ausgebildet ist, um einen Positionsbestimmungssignal zu senden und Positionssignale von Funkstationen zu empfangen. Ferner weist jedes der Flurförderzeuge eine Auswerteeinheit auf, die ausgebildet ist, um an ein zu sendendes Positionsbestimmungssignal zusätzliche Daten in Form von Fahrzeugdaten anzuhängen und aus dem empfangenen Positionssignalen Bereichsdaten abzutrennen. Die Auswerteeinheit ermittelt auch die aktuelle Fahrzeugposition aus mindestens drei empfangenen Positionssignalen. Das erfindungsgemäße System zeichnet sich dadurch aus, dass mit Hilfe der Auswerteeinheit Positionssignale der stationären Funkstationen von Fahrzeugdaten und Bereichsdaten getrennt werden können.

In einer bevorzugten Ausgestaltung ist die Auswerteeinheit dazu ausgebildet, an das Positionsbestimmungssignal als Fahrzeugdaten mindestens einen der folgenden Datensätze anzuhängen: aktuelle Fahrzeugposition, Fahrzeuggeschwindigkeit, Lenkwinkeleinschlag und Betriebsdaten zu Last, Hubhöhe, Ladezustand der Batterie oder zum Fahrzeuglicht. Auch ist die Auswerteeinheit dazu ausgebildet, an das Positionsbestimmungssignal als Fahrzeugdaten mindestens einen Steuerbefehl für eine stationäre Funkstation anzuhängen, der einen mit der stationären Funkstation verbundenen Aktuator steuert. Neben dem Zugriff auf Aktuatoren an der stationären Funkstation ist es auch möglich, auf Sensoren an den stationären Funkstationen zuzugreifen. Hierzu ist bevorzugt die Auswerteeinheit ausgebildet, um als Bereichsdaten mindestens einen der folgenden Datensätze zu ermitteln:
- Sensordaten von einem der jeweiligen stationären Funkstation zugeordneten Sensor,
- Zustandsdaten von einer der jeweiligen stationären Funkstation zugeordneten schaltbaren Einrichtung und
- Betriebsdaten von einer der jeweiligen stationären Funkstation zugeordneten stationären Lagereinrichtung.

In einer weiteren bevorzugten Ausgestaltung ist die Auswerteeinheit dazu ausgelegt, um aus den Bereichsdaten mindestens einen Steuerbefehl zu gewinnen und an eine Fahrzeugsteuerung weiterzuleiten, um mit oder ohne Bestätigung durch einen Fahrer eine Funktion an dem Flurförderzeug zu steuern. Die Bereichsdaten definieren Fahrzeugfunktionen in bestimmten Bereichen und können eine entsprechende Ansteuerung an dem Flurförderzeug auslösen.

In einer bevorzugten Ausgestaltung ist eine übergeordnete Steuereinheit vorgesehen, an die die stationären Funkstationen empfangene Datensätze weiterleiten.

In einer bevorzugten Weiterbildung sind die Funkstationen dazu ausgebildet, untereinander Daten auszutauschen. Dies betrifft sowohl die mobilen Funkstationen als auch die stationären Funkstationen.

Bevorzugte Ausgestaltungen der Erfindung werden nachfolgend näher erläutert. Es zeigen:
- Fig. 1: in einer schematischen Ansicht zwei Flurförderzeuge mit unterschiedlicher Anbindung ihrer mobilen Funkeinheiten sowie drei schematisch dargestellte stationäre Funkeinheiten in unterschiedlichen Ausführungen und
- Fig. 2: ein Lager mit drei stationären Funkeinheiten.

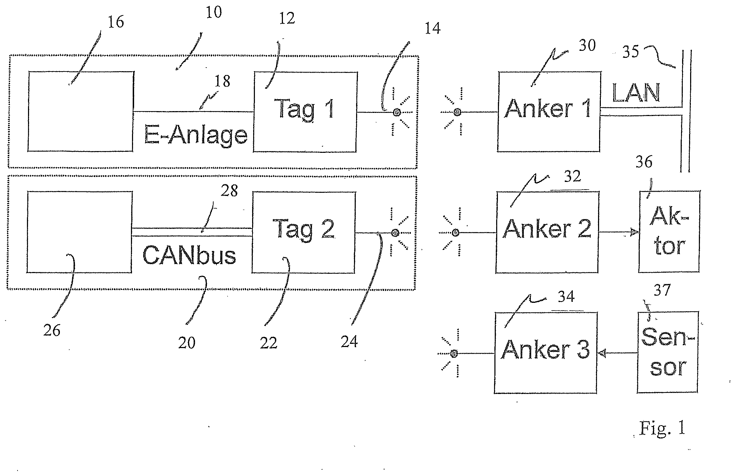

Fig. 1 zeigt eine schematische Ansicht eines Flurförderzeugs 10, das eine mobile Funkeinheit 12 besitzt. Die mobile Funkeinheit 12 besitzt eine schematisch dargestellte Antenne 14. Das schematisch dargestellte Flurförderzeug 10 besitzt eine Fahrzeugsteuerung 16, die über eine interne Verkabelung mit der mobilen Funkeinheit 12 verbunden ist. Neben der leitungsgebundenen Verbindung und einer CAN-Bus basierten Verbindung kann auch eine drahtlose Verbindung vorgesehen sein.

Das ebenfalls schematisch dargestellte Flurförderzeug 20 besitzt eine mobile Funkeinheit 22 mit einer Antenne 24. Die Fahrzeugsteuerung 26 ist über einen CAN-Bus 28 mit der mobilen Funkeinheit 22 verbunden.

Die stationären Funkeinheiten werden auch als Anker bezeichnet. Die Anker 30, 32, 34 sind raumfest in einem Lagerbereich angeordnet. Jeder der Anker besitzt eine Antenne, über die Funksignale gesendet und empfangen werden können. Die stationäre Funkstation 30 ist über ein lokales Netzwerk (LAN) mit der weiteren Datenverarbeitung im Lager verbunden und kann so beispielsweise auf die Daten eines Warenmanagementsystems zugreifen.

Die stationäre Funkeinheit 32 kommuniziert mit einem Aktuator 36. Durch einen entsprechenden Funkbefehl von dem Fahrzeug kann über die stationäre Funkeinheit 32 der Aktuator 36 betätigt werden. So kann beispielsweise ein herannahendes Flurförderzeug ein Öffnen eines Lagertores auslösen.

Die stationäre Funkeinheit 34 ist mit einem Sensor verbunden, wodurch die Möglichkeit besteht, im Lager erfasste Sensorwerte, wie beispielsweise Helligkeit und Temperatur an das oder die Flurförderzeuge im Lager weiterzuleiten.

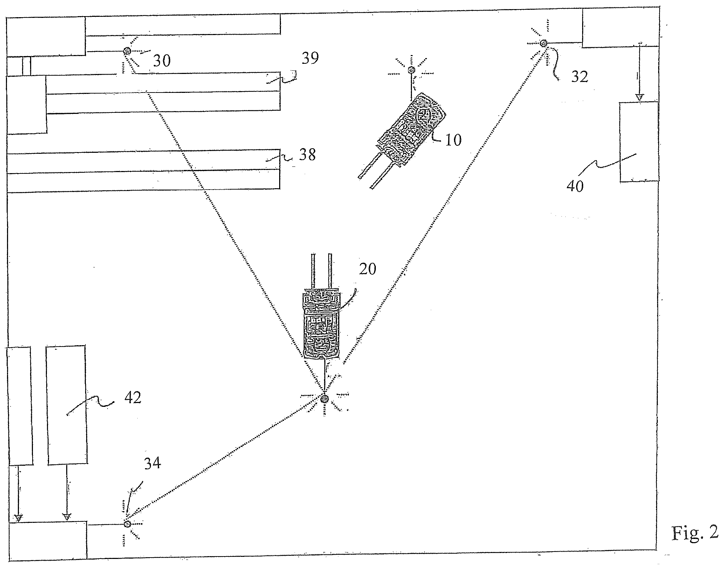

Fig. 2 zeigt für die beiden Flurförderzeuge 10 und 20 in einer schematischen Ansicht die Funkortung. Das Flurförderzeug 20 hat über seine mobile Funkstation nacheinander an die stationären Funkstationen 30, 32, 34 Positionsbestimmungssignale gesendet. Grundsätzlich ist es auch möglich, dass ein einziges Positionsbestimmungssignal ausgesendet wird, das von drei oder mehr stationären Funkstationen 30, 32, 34 empfangen wird. Die stationären Funkstationen 30, 32, 24 antworten nach einer vorbestimmten Zeit mit einem Positionssignal. Aus der Zeitspanne, während der auf die Antwort gewartet werden muss, kann die Entfernung zu der stationären Funkeinheit bestimmt werden. Die Zeitspanne setzt sich dabei aus einer für jede stationäre Funkstation bekannten und jeweils konstanten Antwortzeitspanne und der Laufzeit für das Funksignal zusammen. Die Laufzeit entspricht dabei dem doppelten Abstand zwischen mobiler und stationärer Funkstation. Aus der Entfernung zu mindestens drei stationären Funkeinheiten kann die Position des Flurförderzeugs 20 bestimmt werden. Die Position der drei stationären Funkeinheiten ist hierbei dem Flurförderzeug 20 bekannt.

Erfindungsgemäß wird an dem Flurförderzeug weiterhin die Fahrgeschwindigkeit und die Lenkstellung an die mobile Funkstation übertragen. Die Übertragung erfolgt dabei entweder über die fahrzeugeigenen CAN-Bus 28 oder über hierfür vorgesehene Leitungen 18. In dem Flurförderzeug wird unter Verwendung des Kalman-Filters die Positionsbestimmung über Funk durch die aktuellen Daten zur Fahrzeuggeschwindigkeit und zum Lenkwinkel ergänzt und zu einer genauen Positionsinformation verarbeitet.

Das System zur genauen Positionsbestimmung besitzt zudem den Vorteil, dass positionsabhängig Signale für das Verhalten des Flurförderzeugs erzeugt werden können. Beispielsweise kann die Fahrgeschwindigkeit in Bereichen, in denen viele andere Flurförderzeuge sich befinden und bewegen, reduziert werden. Auch kann die Position des Flurförderzeugs entweder untereinander oder über die stationären Funkeinheiten zwischen den Flurförderzeugen ausgetauscht werden, wodurch Bewegungen erkannt und die Fahrgeschwindigkeit bei zu großer Fahrzeugdichte reduziert werden kann.

Auch ist es möglich, eine Abstandsbestimmung zu den anderen Fahrzeugen durchzuführen, indem hier, wie bei den stationären Funkeinheiten, eine Laufzeitmessung erfolgt.

Bei der erfindungsgemäßen Datenübertragung überträgt das Flurförderzeug 20 Fahrzeugdaten an die stationären Funkstationen 30, 32 und 34. Gleichzeitig können Bereichsdaten von den stationären Funkstationen 30, 32, 34 an das Flurförderzeug 20 übertragen werden.

Bei den Fahrzeugdaten des Flurförderzeugs 20 kann beispielsweise die aktuelle Position und die Fahrgeschwindigkeit sowie der Lenkwinkeleinschlag übertragen werden. Auf diese Weise kann erkannt werden, ob ein Risiko zu einer Kollision mit dem Fahrzeug 10 besteht und ob das Flurförderzeug 20 die Regale 39, 38 anfährt, die sich in der Nähe der stationären Funkeinheit 32 befinden. Die Betriebsdaten zu Last, Hubhöhe, Ladezustand einer Batterie und Licht können von den stationären Funkstationen 30, 32, 34 gesammelt werden und beispielsweise gemeinsam mit der aktuellen Position des Flurförderzeugs 20 an ein übergeordnetes Flottenmanagement-System oder eine Materialfluss-Analyse weitergeleitet werden. Hierbei ist vom besonderen Vorteil, dass die Daten mit der Ortsinformation des Flurförderzeugs verknüpft sind.

Mit den Bereichsdaten, die das Flurförderzeug 20 empfängt, können auch Daten an das Flurförderzeug 20 übermittelt werden, die beispielsweise anzeigen, ob ein Lagertor 40 geöffnet oder ob eine stationäre Förderanlage 42 aktiviert ist.

Neben dem vorstehend beschriebenen Datenaustausch zwischen stationären Funkstationen und Flurförderzeugen ist auch ein Datenaustausch zwischen den Flurförderzeugen und zwischen den stationären Funkstationen möglich. Bezogen auf Fig. 1 bedeutet dies, dass, wenn beispielsweise der Sensor 37 an der stationären Funkstation 34 einen Fehler meldet, dieser Fehler über eine Funkverbindung an die stationäre Funkstation 30 weitergeleitet werden kann, um von hier aus über das Netzwerk 35 an eine übergeordnete Rechnereinheit weitergeleitet zu werden.

Bevorzugt sind sämtliche Funkeinheiten des erfindungsgemäßen Systems mit einer eineindeutigen Adresse gekennzeichnet, so dass auch eine Kommunikation unter allen Teilnehmern des Netzwerkes möglich und adressierbar ist.

### Bezugszeichenliste

- 10: Flurförderzeug
- 12: mobile Funkeinheit
- 14: Antenne
- 16: Fahrzeugsteuerung
- 18: Leitung
- 20: Flurförderzeug
- 22: Funkeinheit
- 24: Antenne
- 26: Fahrzeugsteuerung
- 28: CAN-Bus
- 30: stationäre Funkeinheit
- 32: stationäre Funkeinheit
- 34: stationäre Funkeinheit
- 35: Netzwerk
- 36: Aktuator
- 37: Sensor
- 38: Regal
- 39: Regal
- 40: Lagertor
- 42: Förderanlage

## Patentansprüche

1. Verfahren zur Datenübertragung in einem System zur Ortsbestimmung von mindestens einem Flurförderzeug (20) in einem Bereich mit einer Vielzahl von stationären Funkstationen (30, 32, 34), die, ansprechend auf ein Positionsbestimmungssignal, ein Positionssignal aussenden, wobei das Flurförderzeug eine mobile Funkstation (12) aufweist, mit folgenden Verfahrensschritten:
- Senden eines Positionsbestimmungssignals mit der mobilen Funkstation (12) an die stationären Funkstationen (30, 32, 34),
- Senden jeweils eines Positionssignals durch die stationären Funkstationen (30, 32, 34), ansprechend auf ein empfangenes Positionsbestimmungssignal,
- Empfangen von mehreren Positionssignalen mit der mobilen Funkstation (12) von mindestens drei stationären Funkstationen (30, 32, 34),
- Anhängen von Daten in Form von Fahrzeugdaten an das Positionsbestimmungssignal und/oder in Form von Bereichsdaten an das Positionssignal,
- Auswerten der angehängten Daten nach Empfang des Positionsbestimmungssignals und/oder des Positionssignals, und
- Ermitteln einer aktuellen Fahrzeugposition aus mindestens drei empfangenen Positionssignalen.

2. Verfahren nach Anspruch 1, **dadurch gekennzeichnet, dass** die Fahrzeugdaten mindestens einen der folgenden Datensätze enthalten:
- aktuelle Fahrzeugposition,
- Fahrzeuggeschwindigkeit,
- Lenkwinkeleinschlag und
- Betriebsdaten zu Last, Hubhöhe, Ladezustand einer Batterie oder zum Fahrzeuglicht.

3. Verfahren nach Anspruch 1 oder 2, **dadurch gekennzeichnet, dass** die Fahrzeugdaten mindestens einen Steuerbefehl für eine stationäre Funkstation (30, 32, 34) enthalten, der einen mit der stationären Funkstation (30, 32, 34) verbundenen Aktuator steuert.

4. Verfahren nach einem der Ansprüche 1 bis 3, **dadurch gekennzeichnet, dass** die Bereichsdaten mindestens einen der folgenden Datensätze enthalten:
- Sensordaten von einem der jeweiligen stationären Funkstation (30, 32, 34) zugeordneten Sensor,
- Zustandsdaten von einer der jeweiligen stationären Funkstation (30, 32, 34) zugeordneten schaltbaren Einrichtung und
- Betriebsdaten von einer der jeweiligen stationären Funkstation (30, 32, 34) zugeordneten stationären Lagereinrichtung.

5. Verfahren nach einem der Ansprüche 1 bis 4, **dadurch gekennzeichnet, dass** die Bereichsdaten mindestens einen Steuerbefehl für ein Flurförderzeug (20) enthalten, der eine Funktion an dem Flurförderzeug (20) mit oder ohne Bestätigung durch einen Fahrer steuert.

6. Verfahren nach einem der Ansprüche 2 bis 5, **dadurch gekennzeichnet, dass** die stationären Funkstationen (30, 32, 34) empfangene Datensätze zu Fahrzeugdaten an eine übergeordnete Steuereinheit (40, 42) weiterleiten.

7. Verfahren nach einem der Ansprüche 1 bis 6, **dadurch gekennzeichnet, dass** die stationären Funkstationen (30, 32, 34) dazu ausgebildet sind, untereinander Daten zu senden und zu empfangen.

8. Verfahren nach einem der Ansprüche 1 bis 7, **dadurch gekennzeichnet, dass** die mobilen Funkstationen (12) dazu ausgebildet sind, untereinander Daten auszutauschen.

9. System zur Ortsbestimmung von mindestens einem Flurförderzeug (20), wobei das System eine Vielzahl von stationären Funkstationen (30, 32, 34) aufweist, die ausgebildet sind, um, ansprechend auf ein Positionsbestimmungssignal ein Positionssignal auszusenden, wobei jedes der Flurförderzeuge (20) eine mobile Funkstation (22) aufweist, die ausgebildet ist, um ein Positionsbestimmungssignal zu senden und Positionssignale von den stationären Funkstationen (30, 32, 34) zu empfangen, und eine Auswerteinheit aufweist, die ausgebildet ist, um an ein zu sendendes Positionsbestimmungssignal Daten in Form von Fahrzeugdaten anzuhängen und aus empfangenen Positionssignalen Daten in Form von Bereichsdaten abzutrennen, wobei die Auswerteeinheit eine aktuelle Fahrzeugposition aus mindestens drei empfangenen Positionssignalen ermittelt.

10. System nach Anspruch 9, **dadurch gekennzeichnet, dass** die Auswerteeinheit ausgebildet ist, um an das Positionsbestimmungssignal als Fahrzeugdaten mindestens einen der folgenden Datensätze anzuhängen: aktuelle Fahrzeugposition, Fahrzeuggeschwindigkeit, Lenkwinkeleinschlag und Betriebsdaten zu Last, Hubhöhe, Ladezustand der Batterie oder zum Fahrzeuglicht.

11. System nach Anspruch 9 oder 10, **dadurch gekennzeichnet, dass** die Auswerteeinheit ausgebildet ist, um an das Positionsbestimmungssignal als Fahrzeugdaten mindestens einen Steuerbefehl für einen mit der stationären Funkstation (30, 32, 34) verbundenen Aktuator anzuhängen.

12. System nach einem der Ansprüche 9 bis 11, **dadurch gekennzeichnet, dass** die Auswerteeinheit ausgebildet ist, um als Bereichsdaten mindestens einen der folgenden Datensätze zu ermitteln: Sensordaten von einem der jeweiligen stationären Funkstation zugeordneten Sensor, Zustandsdaten von einer der jeweiligen stationären Funkstation zugeordneten schaltbaren Einrichtung und Betriebsdaten von einer der jeweiligen stationären Funkstation (30, 32, 34) zugeordneten stationären Lagereinrichtung.

13. System nach einem der Ansprüche 9 bis 12, **dadurch gekennzeichnet, dass** die Auswerteeinheit ausgelegt ist, um aus den Bereichsdaten mindestens einen Steuerbefehl zu gewinnen und an eine Fahrzeugsteuerung weiterzuleiten, um mit oder ohne Bestätigung durch einen Fahrer eine Funktion an dem Flurförderzeug zu steuern.

14. System nach einem der Ansprüche 9 bis 13, **dadurch gekennzeichnet, dass** eine übergeordnete Steuereinheit vorgesehen ist, an die die stationären Funkstationen (30, 32, 34) empfangene Datensätze weiterleiten.

15. System nach einem der Ansprüche 9 bis 14, **dadurch gekennzeichnet, dass** die Funkstationen dazu ausgebildet sind, untereinander Daten auszutauschen.

## Claims

1. A method for transmitting data in a system for determining the location of at least one industrial truck (20) in an area comprising a plurality of stationary wireless stations (30, 32, 34) that send out a position signal in response to a position determination signal, wherein the industrial truck comprises a mobile wireless station (12), the method comprising the steps of:
sending a position determination signal by means of the mobile wireless station (12) to the stationary wireless stations (30, 32, 34),
sending in each case one position signal by means of the stationary wireless stations (30, 32, 34) in response to a received position determination signal,
receiving multiple position signals by means of the mobile wireless station (12) from at least three stationary wireless stations (30, 32, 34),
appending data in the form of vehicle data to the position determination signal and/or in the form of area data to the position signal,
evaluating the appended data upon receipt of the position determination signal and/or position signal, and
determining a current vehicle position from at least three received position signals.

2. The method according to claim 1, **characterized in that** the vehicle data contain at least one of the following data sets:
current vehicle position,
vehicle speed,
steering angle, and
operating data relating to load, lift height, charge level of a battery, or relating to the vehicle light.

3. The method according to claim 1 or 2, **characterized in that** the vehicle data contain at least one control command for a stationary wireless station (30, 32, 34) that controls an actuator connected to the stationary wireless station (30, 32, 34).

4. The method according to any one of claims 1 to 3, **characterized in that** the area data contain at least one of the following data sets:
sensor data from a sensor assigned to the relevant stationary wireless station (30, 32, 34),
status data from a switchable apparatus assigned to the relevant stationary wireless station (30, 32, 34), and
operating data from a stationary warehouse apparatus assigned to the relevant stationary wireless station (30, 32, 34).

5. The method according to any one of claims 1 to 4, **characterized in that** the area data contain at least one control command for an industrial truck (20) that controls a function on the industrial truck (20) with or without confirmation from a driver.

6. The method according to any one of claims 2 to 5, **characterized in that** the stationary wireless stations (30, 32, 34) forward received data sets on vehicle data to a master control unit (40, 42).

7. The method according to any one of claims 1 to 6, **characterized in that** the stationary wireless stations (30, 32, 34) are designed to send and receive data among themselves.

8. The method according to any one of claims 1 to 7, **characterized in that** the mobile wireless stations (12) are designed to exchange data among themselves.

9. A system for determining the location of at least one industrial truck (20), wherein the system comprises a plurality of stationary wireless stations (30, 32, 34) that are designed to send out a position signal in response to a position determination signal, wherein each of the industrial trucks (20) comprises a mobile wireless station (22) that is designed to send a position determination signal and to receive position signals from the stationary wireless stations (30, 32, 34), and comprises an evaluation unit that is designed to append data in the form of vehicle data to a position determination signal to be sent and to separate data in the form of area data from received position signals, wherein the evaluation unit determines a current vehicle position from at least three received position signals.

10. The system according to claim 9, **characterized in that** the evaluation unit is designed to append at least one of the following data sets as vehicle data to the position determination signal: current vehicle position, vehicle speed, steering angle, and operating data relating to load, lift height, charge level of the battery, or relating to the vehicle light.

11. The system according to claim 9 or 10, **characterized in that** the evaluation unit is designed to provides append at least one control command for an actuator connected to the stationary wireless station (30, 32, 34) as vehicle data to the position determination signal.

12. The system according to any one of claims 9 to 11, **characterized in that** the evaluation unit is designed to identify at least one of the following data sets as area data: sensor data from a sensor assigned to the relevant stationary wireless station, status data from a switchable apparatus assigned to the relevant stationary wireless station, and operating data from a stationary warehouse apparatus assigned to the relevant stationary wireless station (30, 32, 34).

13. The system according to any one of claims 9 to 12, **characterized in that** the evaluation unit is configured to obtain at least one control command from the area data and to forward said control command to a vehicle control system in order to control a function on the industrial truck with or without confirmation from a driver.

14. The system according to any one of claims 9 to 13, **characterized in that** a master control unit to which the stationary wireless stations (30, 32, 34) forward received data sets is provided.

15. The system according to any one of claims 9 to 14, **characterized in that** the wireless stations are designed to exchange data among themselves.

## Revendications

1. Procédé pour la transmission de données dans un système de détermination de la position d'au moins un chariot de manutention (20) dans une zone comprenant une pluralité de stations radio stationnaires (30, 32, 34), lesquelles émettent un signal de position en réponse à un signal de détermination de position, dans lequel le chariot de manutention présente une station radio mobile (12), avec les étapes de procédé suivantes :
- envoi d'un signal de détermination de position aux stations radio stationnaires (30, 32, 34) avec la station radio mobile (12),
- envoi d'un signal de position respectivement par les stations radio stationnaires (30, 32, 34) en réponse à un signal de détermination de position reçu,
- réception de plusieurs signaux de position provenant d'au moins trois stations radio stationnaires (30, 32, 34) avec la station radio mobile (12),
- ajout de données sous la forme de données de véhicule au signal de détermination de position et/ou sous la forme de données de zone au signal de position,
- évaluation des données ajoutées après réception du signal de détermination de position et/ou du signal de position, et
- détermination d'une position de véhicule actuelle à partir d'au moins trois signaux de position reçus.

2. Procédé selon la revendication 1, **caractérisé en ce que** les données de véhicule contiennent l'un au moins des jeux de données suivants :
- position de véhicule actuelle,
- vitesse de véhicule,
- angle de braquage et
- données de fonctionnement concernant la charge, la hauteur de levage, l'état de chargement d'une batterie ou les feux de véhicule.

3. Procédé selon la revendication 1 ou 2, **caractérisé en ce que** les données de véhicule contiennent au moins un ordre de commande pour une station radio stationnaire (30, 32, 34), lequel commande un actionneur relié à la station radio stationnaire (30, 32, 34).

4. Procédé selon l'une des revendications 1 à 3, **caractérisé en ce que** les données de zone contiennent l'un au moins des jeux de données suivants :
- données de capteur d'un capteur attribué à la station radio stationnaire (30, 32, 34) respective,
- données d'état d'un dispositif commutable attribué à la station radio stationnaire (30, 32, 34) respective et
- données de fonctionnement d'un dispositif de stockage stationnaire attribué à la station radio stationnaire (30, 32, 34) respective.

5. Procédé selon l'une des revendications 1 à 4, **caractérisé en ce que** les données de zone contiennent au moins un ordre de commande pour un chariot de manutention (20), lequel commande une fonction sur le chariot de manutention (20) avec ou sans confirmation par un conducteur.

6. Procédé selon l'une des revendications 2 à 5, **caractérisé en ce que** les stations radio stationnaires (30, 32, 34) transmettent des jeux de données reçus concernant des données de véhicule à une unité de commande supérieure (40, 42).

7. Procédé selon l'une des revendications 1 à 6, **caractérisé en ce que** les stations radio stationnaires (30, 32, 34) sont conçues pour envoyer et recevoir des données entre elles.

8. Procédé selon l'une des revendications 1 à 7, **caractérisé en ce que** les stations radio mobiles (12) sont conçues pour échanger des données entre elles.

9. Système de détermination de la position d'au moins un chariot de manutention (20), le système présentant une pluralité de stations radio stationnaires (30, 32, 34) conçues pour émettre un signal de position en réponse à un signal de détermination de position, dans lequel chacun des chariots de manutention (20) présente une station radio mobile (22) conçue pour envoyer un signal de détermination de position et pour recevoir des signaux de position en provenance des stations radio stationnaires (30, 32, 34), et présente une unité d'évaluation conçue pour ajouter des données sous la forme de données de véhicule à un signal de détermination de position à envoyer et pour extraire des données sous la forme de données de zone à partir de signaux de position reçus, dans lequel l'unité d'évaluation détermine une position de véhicule actuelle à partir d'au moins trois signaux de position reçus.

10. Système selon la revendication 9, **caractérisé en ce que** l'unité d'évaluation est conçue pour ajouter l'un au moins des jeux de données suivants au signal de détermination de position en tant que données de véhicule : position de véhicule actuelle, vitesse de véhicule, angle de braquage et données de fonctionnement concernant la charge, la hauteur de levage, l'état de chargement de la batterie ou les feux de véhicule.

11. Système selon la revendication 9 ou 10, **caractérisé en ce que** l'unité d'évaluation est conçue pour ajouter au moins un ordre de commande au signal de détermination de position en tant que données de véhicule pour un actionneur relié à la station radio stationnaire (30, 32, 34).

12. Système selon l'une des revendications 9 à 11, **caractérisé en ce que** l'unité d'évaluation est conçue pour déterminer l'un au moins des jeux de données suivants en tant que données de zone : données de capteur d'un capteur attribué à la station radio stationnaire respective, données d'état d'un dispositif commutable attribué à la station radio stationnaire respective et données de fonctionnement d'un dispositif de stockage stationnaire attribué à la station radio stationnaire (30, 32, 34) respective.

13. Système selon l'une des revendications 9 à 12, **caractérisé en ce que** l'unité d'évaluation est configurée pour récupérer au moins un ordre de commande à partir des données de zone et de transmettre celui-ci à une commande de véhicule, afin de commander une fonction sur le chariot de manutention avec ou sans confirmation par un conducteur.

14. Système selon l'une des revendications 9 à 13, **caractérisé en ce qu'**il est prévu une unité de commande supérieure à laquelle les stations radio stationnaires (30, 32, 34) transmettent des jeux de données reçus.

15. Système selon l'une des revendications 9 à 14, **caractérisé en ce que** les stations radio sont conçues pour échanger des données entre elles.
